Europäisches Patentamt

European Patent Office

Office européen des brevets

(11) Publication number: **0 020 148**
A1

(12) EUROPEAN PATENT APPLICATION

(21) Application number: **80301786.2**

(22) Date of filing: **29.05.80**

(51) Int. Cl.³: **B 65 G 17/12, B 65 G 17/42**

(30) Priority: **30.05.79 GB 7918853**

(43) Date of publication of application: **10.12.80**
Bulletin 80/25

(84) Designated Contracting States: **BE DE FR GB NL SE**

(71) Applicant: **Gough & Company (Hanley) Limited, Clough Street, Hanley, Stoke on Trent, Staffordshire (GB)**

(72) Inventor: **Gough, George Terah, 1 Dale Close, Baldwins Gate, Newcastle, Staffordshire (GB)**

(74) Representative: **Carpmael, John William Maurice et al, CARPMAELS & RANSFORD 43 Bloomsbury Square, London, WC1A 2RA (GB)**

(54) Improvements relating to bucket type elevators and conveyors.

(57) The buckets are supported on each side by a pair of continuous ropes.

The elevator comprises a framework containing a series of overlapping buckets.

At the top is a drive unit (1) which is also the emptying station. At the bottom is a fill unit (4) which also acts as a tension unit. Units (1 and 4) are joined by a pair of intermediate units (2) and a middle unit (3).

A bucket and rope assembly (5) is supported on sprockets (6) in the fill unit (4) and in the drive unit (1) are essential. The sprocket (6) in the lower intermediate unit (2) is provided to give additional support for the weight of a heavy rope and bucket assembly but would not be required with a lightweight assembly. An additional sprocket (not shown) may be inserted if required in the upper intermediate unit (2).

The bucket and rope assembly (5) comprises a series of overlapping buckets (8) preferably made of mild steel, stainless steel, plastic or nylon coated mild steel, or moulded plastic material such as polypropylene. The buckets are attached to parallel steel wire ropes (20) by ferrules and connectors or by trunnions. The ropes (20) may be, for example, plastic or nylon covered steel wire ropes.

"Improvements relating to bucket
type elevators and conveyors"

This invention relates to bucket type elevators and conveyors. The term "bucket type" is intended to embrace scoops, skips and other similar load carrying devices.

Bucket type elevators and conveyors are known, but they normally involve use of chains and sprockets to which the buckets are connected. Chains and sprockets are expensive to manufacture and maintain and require considerable and frequent lubrication.

An object of the invention is to provide a bucket-type elevator or conveyor which is cheaper to manufacture than existing types, easier to maintain, requires little or no lubrication and can operate at high speeds, e.g. of the order of 100 to 200 feet per minute (i.e. approximately 30 to 60 metres per minute).

According to the invention there is a bucket type continuous elevator, the elevator comprising a framework, at least two pairs of sprockets mounted in the framework, means for driving at least one sprocket, a pair of continuous cables passing over said sprockets and adapted to be driven by the sprockets, the buckets being attached to the cables by transverse tie rods which extend through apertures in adjacent buckets, and means for attaching the rods to the pair of continous cables, the buckets having overlapping adjacent ends.

Preferably there are rollers mounted at the outer ends of the tie rods and adapted to roll in guide means mounted within the framework.

The means for attaching the rods to the cables may comprise ferrules fixed to the cables at intervals said ferrules being engaged in connectors and each connector being joined to the associated tie rod.

The ferrules are preferably joined to the connectors by pins passing through apertures in the connectors and engaging slots or apertures in the ferrules.

The ferrules may be attached to the cables by grub screws extending through radial holes in the ferrules and engaging metal pads which press against the cables and push the cables into shallow recesses in the inner wall of each ferrule.

The connectors may be adapted to engage between the teeth of the sprockets so as to enable the sprockets to drive the cables.  The means for attaching the rods to the cables may include trunnions, the trunnions including means by which they are clamped to the continuous cables.

Each bucket may be supported by only two continuous ropes or cables, one rope or cable being located on each side of each bucket.

Alternatively each bucket is supported by two pairs of continuous ropes or cables, one pair of ropes or cables being located on one side of each bucket and one pair on the other side.

In the accompanying drawings:-

Fig. 1 is a side elevation of a bucket type continuous elevator embodying the present invention;

Fig. 2 is an end elevation of the same elevator;

Fig. 3 is an enlarged detail of a bucket;

Fig. 4 shows one side of a bucket and the trunnions by which it is supported from a pair of cables at that side;

Fig. 5 is an enlarged side elevation of a pair of buckets together with supporting cables passing over a sprocket;

Fig. 6 is a section through an intermediate unit showing a guide casing and rollers and trunnion assembly;

Fig. 7 shows a detail of a trunnion illustrating how ends of a cable are joined;

Fig. 8 is an internal view of an alternative embodiment of the elevator on which there is only one cable on each side of the buckets and the method of attachment of the cables to the tie rods is changed.

Fig. 9 illustrates a portion of a cable with a ferrule attached to it;

Fig. 10 illustrates a similar cable and ferrule with a modified method of attachment;

Fig. 11 shows how two ends of cables, each carrying ferrules are joined;

Figs. 12 and 13 are respectively plan and side elevations of a connector for joining a cable to a tie rod;

Figs. 14 and 15 are respectively plan and side elevations of a connector for joining two cable ends together and for subsequent attachment to a tie rod;

Fig. 16 is a side elevation of an alternative shape of bucket;

Fig. 17 is a scrap elevation of part of a sprocket showing how the cable and connector mate with the sprocket in the alternative embodiment; and

Fig. 18 is an end elevation showing the shape of the outer portion of the sprocket of Fig. 17.

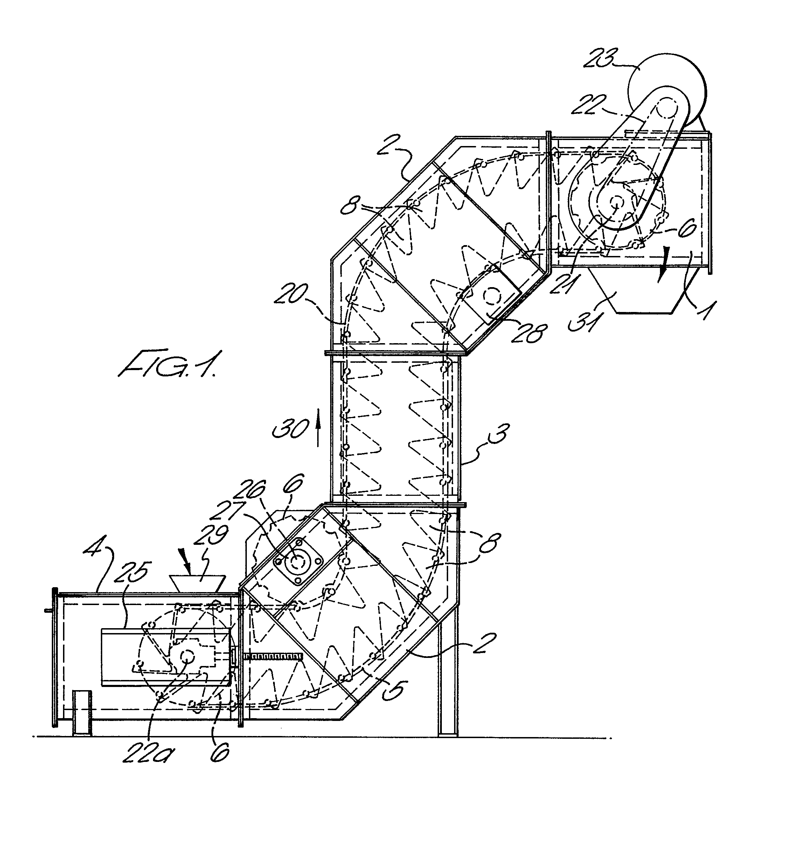

In Figure 1 is shown an elevator having buckets supported by wire ropes. The elevator framework comprises a series of sections.

At the top is a drive unit 1 which is also the emptying station. At the bottom is a fill unit 4 which also acts as a tension unit. Units 1 and 4 are joined by a pair of intermediate units 2 and a middle unit 3.

A bucket and rope assembly 5 is supported on specially designed sprockets 6. The sprockets 6 in the fill unit 4 and in the drive unit 1 are essential. The sprocket 6 in the lower intermediate unit 2 is provided to give additional support for the weight of heavy rope and bucket assembly but would not be required with a lightweight assembly. An additional sprocket (not shown) may be inserted if required in the upper intermediate unit 2.

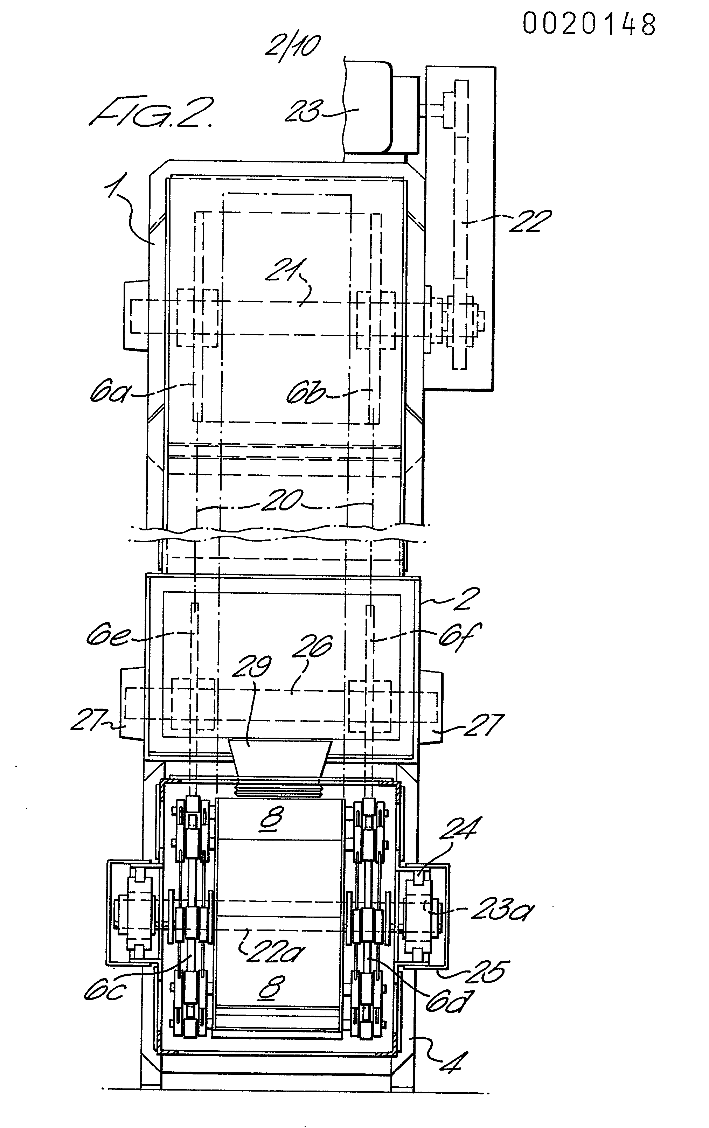

The bucket and rope assembly 6 comprises a series of overlapping buckets 8 preferably made of mild steel, stainless steel, plastic or nylon coated mild steel, or moulded plastic material such as polypropylene. The buckets are attached to parallel ropes 20 (Figures 1 and 2) by trunnions (described later). The ropes 20 may be, for example, plastic or nylon covered steel wire ropes but plastic or nylon covering is not essential.

As shown in Figure 2, the parallel ropes 20 are driven by a pair of sprockets 6a and 6b both keyed to a drive shaft 21 driven via a chain and sprocket drive 22 by an electric motor 23.

Although the elevator is shown as being driven from the upper sprockets, it could equally well be driven from the cornersprockets.

At the fill unit 4 the ropes pass over two sprockets 6c and 6d. Sprocket 6d is keyed to shaft 22a and sprocket 6c runs freely on shaft 22a. Shaft 22a is supported by bearings 23a in bearing housings 24 which are horizontally slidable in guideways 25 to enable the tension on the ropes or cables to be adjusted by moving the shaft and sprockets horizontally. The additional sprockets 6e and 6f in the intermediate unit 2 are supported on a shaft 26 carried by bearings 27. Sprocket 6e is keyed to shaft 26 and sprocket 6f is free running on the shaft. In the upper intermediate unit 2, the cable assembly passes through a guide casing 28 (Fig. 1), described later.

The buckets 8 are fed, with material to be elevated, via a chute 29 by means of a controlled feed to a predetermined level, for example 60% full, and transported upwardly in the direction of arrow 30. Because of the special shape of the buckets 8 they retain their contents even when in the horizontal position as shown in the middle unit 3. The buckets 8 discharge at the lower side of the drive unit 6 into a receiving chute 31. Again, because of the special design of buckets 8 they do not discharge their contents into each other.

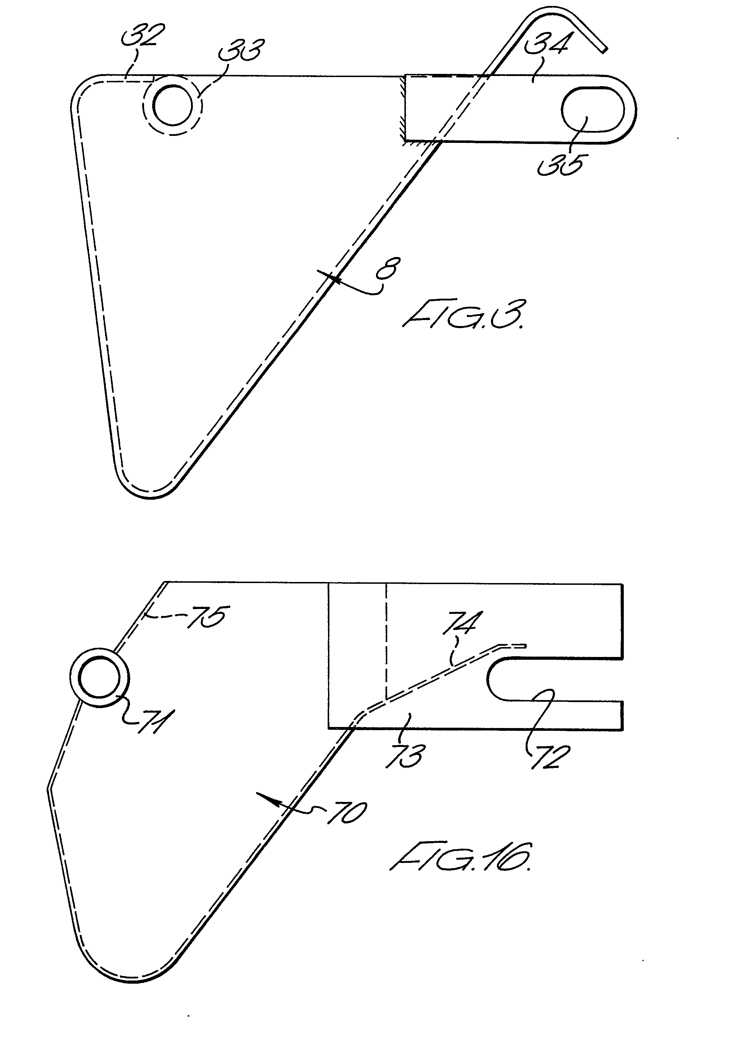

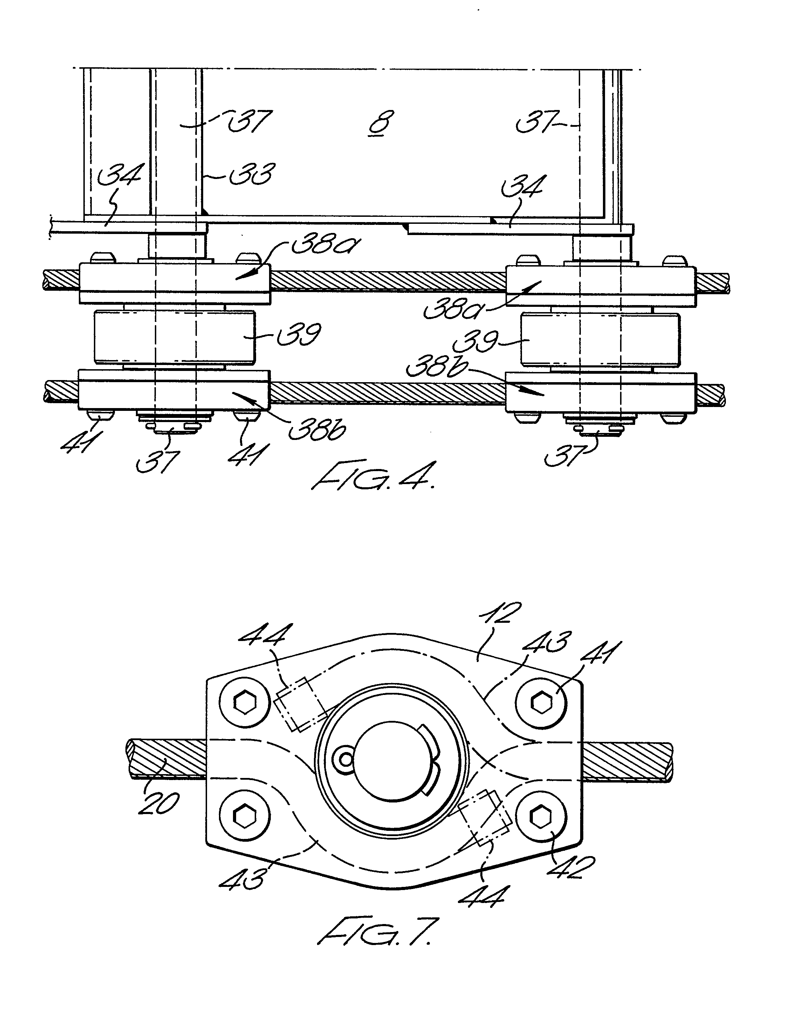

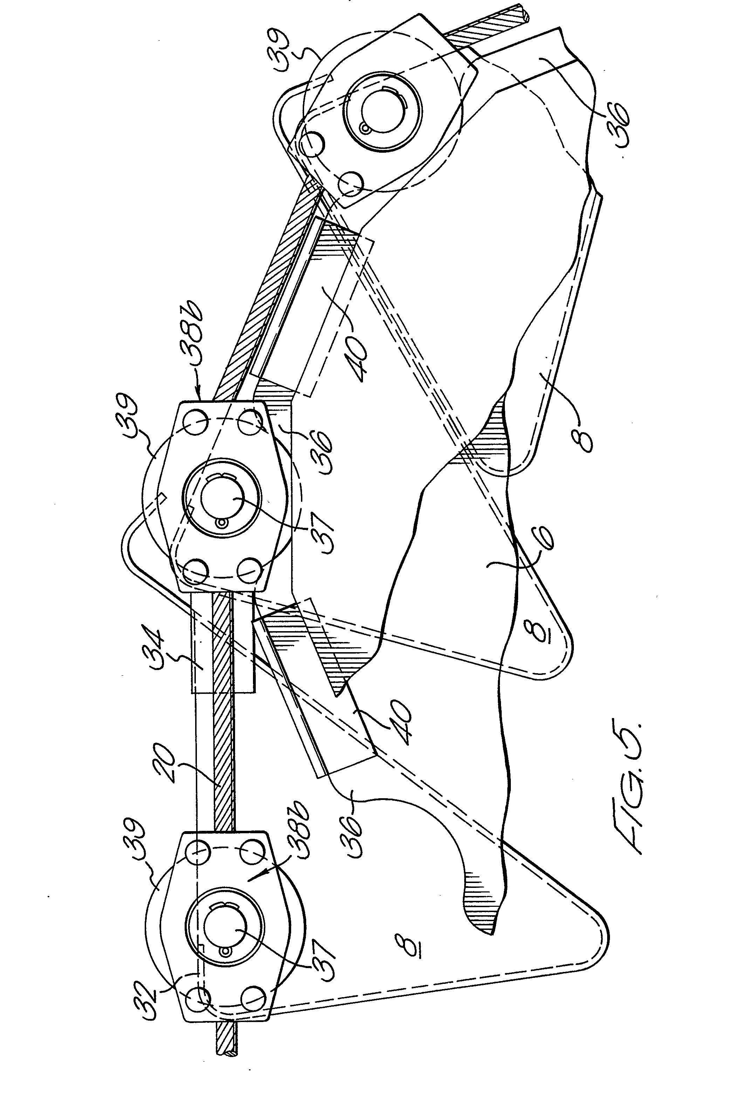

One form of each bucket 8 is shown in Figure 3. It will be seen that the bucket 8 has a lip 32 which prevents accidental discharge of the contents when the bucket is horizontal. The bucket 8 has welded to a sleeve 33 and a bracket 34 with an elongated aperture 35 in it. The sleeve 33 and brackets 34 are the means by which ecah bucket 8 is attached to tie rods 37 (Figures 4 and 5) in turn supported by the pairs of cables 20 through a double trunnion assembly 38a and 38b. It will be seen that each tie rod 37 passes through the sleeve 33 of one bucket 8 and the aperture 35 in bracket 34 of the adjacent bucket 8. The elongated aperture 35 allows for relative movement between adjacent buckets 8 as they pass round a bend. Each trunnion 38a, 38b is attached to respective cable 20 forming a pair of cables on one side of the bucket assembly. The trunnions and cables are, of course, duplicated on the other side of the bucket assembly. Between trunnions 38 and 38a is located a roller or wheel 39. As the cable assembly passes over each of the sprockets 6, the rollers or wheels 39 engage between the sprocket teeth 36 and support the trunnions as well as driving the ropes or cables (see enlarged portion of sprocket in Figure 5). The cables 20 are supported by cable guides 40 welded to the sprockets 6. The rollers or wheels 39 may be made of nylon or steel for example.

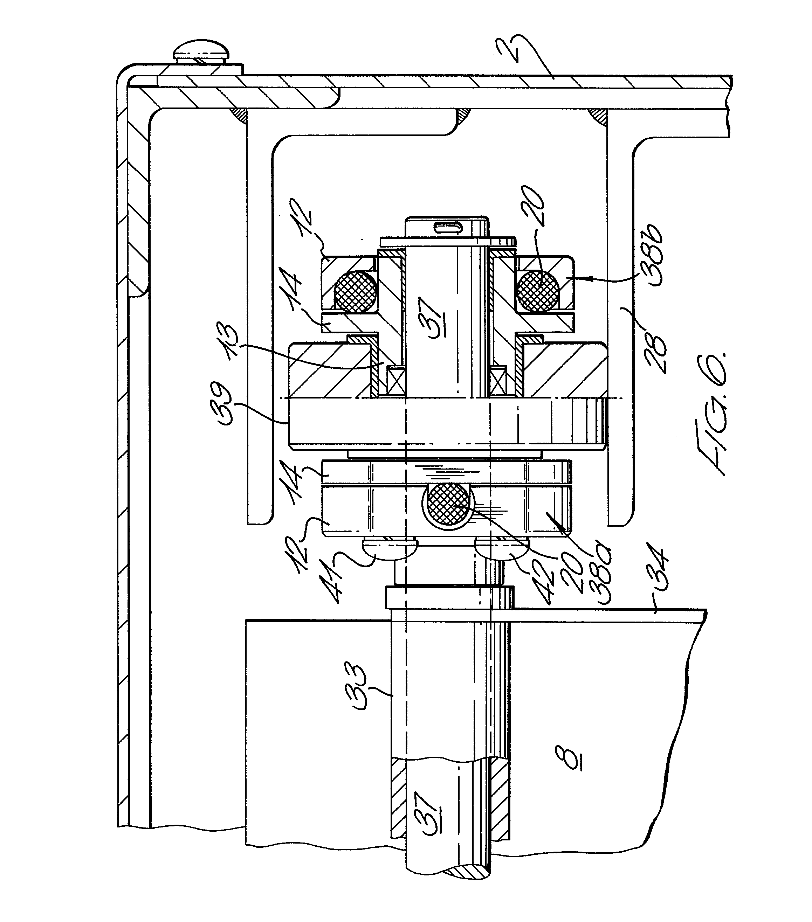

The rollers or wheels 39 also support the cable and bucket assembly as it passes through the guide casing 28 in the upper intermediate unit 2 (see Figures 1 and 6).

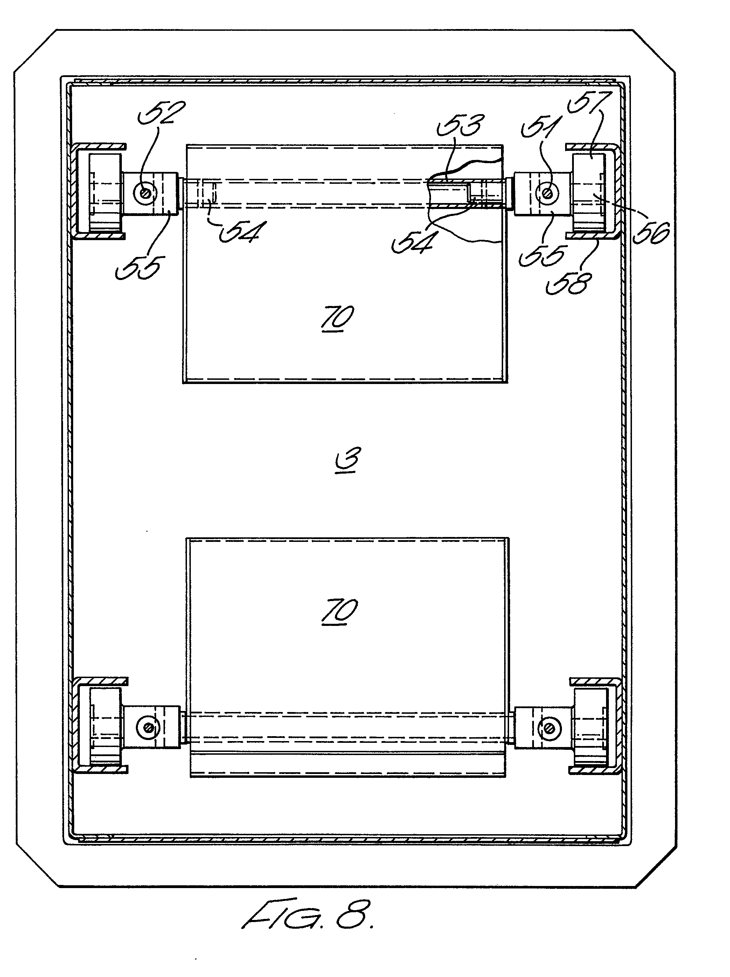

The construction of the trunnions 38a and 38b and rollers 39 shown in detail in Figures 6 and 7. The trunnion 38 is in two clamping parts 12 and 14. Part 12 is recessed as shown in Figure 7 either to receive two ends of a cable (as shown) or to receive a cable (dotted line) which passes through the trunnion chain (dashed line). Trunnion clamping parts 12 and 14 are held together by socket screws 41, 42 to clamp the cable tightly to the trunnions. The tie rod 37 is passed through the trunnion assembly.

The roller 39 is located on a bearing 3 on a sleeve portion of part 14 which may be, for example, of nylon or plastic based ferrobestos.

When a joint occurs in the cable it is treated as shown in Figure 7. Portions 43 of the recessed trunnion clamp part 12 are milled out to form shallow cavities to receive collars 44 soldered to the cable ends which hold the cable ends firmly in position when the trunnions are bolted tightly together.

Although a specific type of trunnion has been described any type of trunnion or clamping arrangement that achieves the same results can be used.

The elevator may operate at an angle of less than 90° to the horizontal, in which case a bucket of slightly different design may be employed and the lips on the bucket may be dispensed with.

Although two supporting ropes are illustrated on each side of each bucket, there may be only one on each side or there may be more than two, for example three or more.

The tie bar need not pass through the bucket; it could, for example, alternatively be formed in two parts, one on each side of and integral with the bucket.

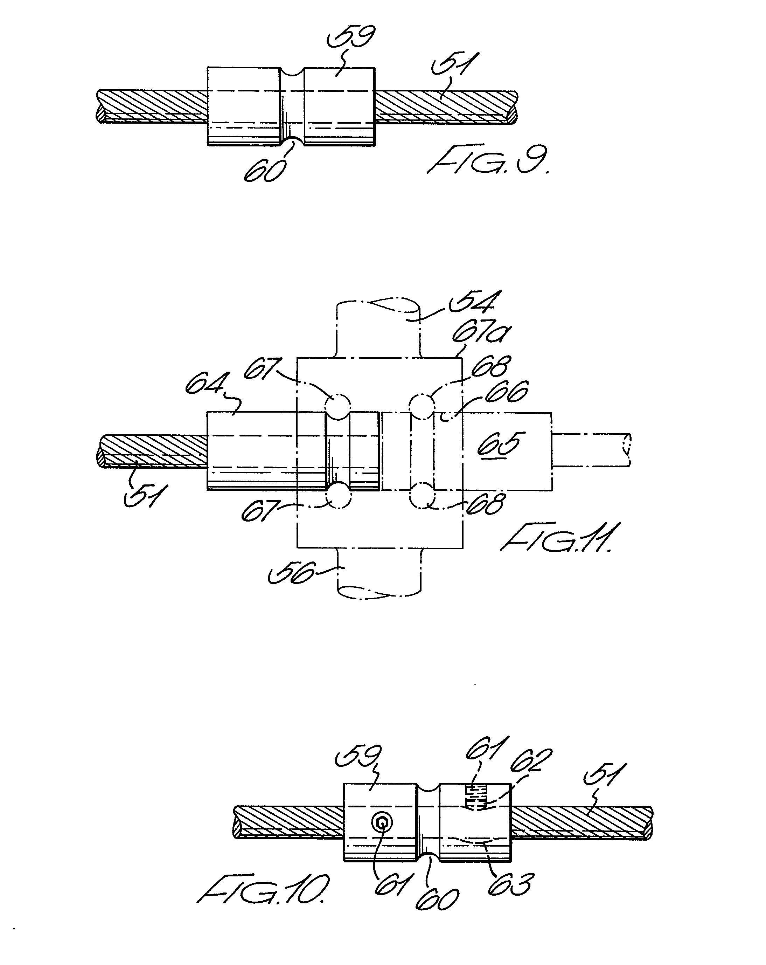

Instead of using a pair of cables on each side of each bucket as illustrated in Fig. 4, a single cable on each side may be used. As seen in Fig. 8 a bucket 50 is supported on a pair of cables 51, 52 one on each side of the bucket. A guide tube 53 runs through the bucket and receives stub shafts 54 of connectors 55 attached to the cables 51, 52.

Each connector 55 also carries a stub shaft 56 on which is mounted a freely rotatable roller 57 (e.g. of Nylon). The rollers run in tracks 58 mounted internally in the framework. The tracks are discontinuous where the connectors 55 and cables 51 pass over the sprockets.

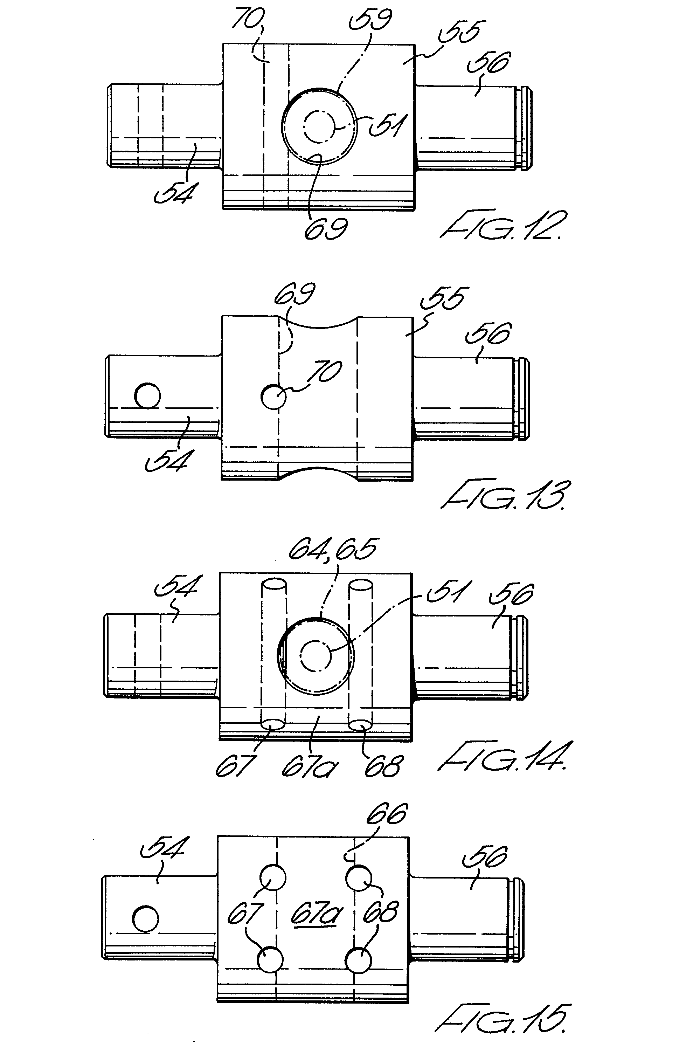

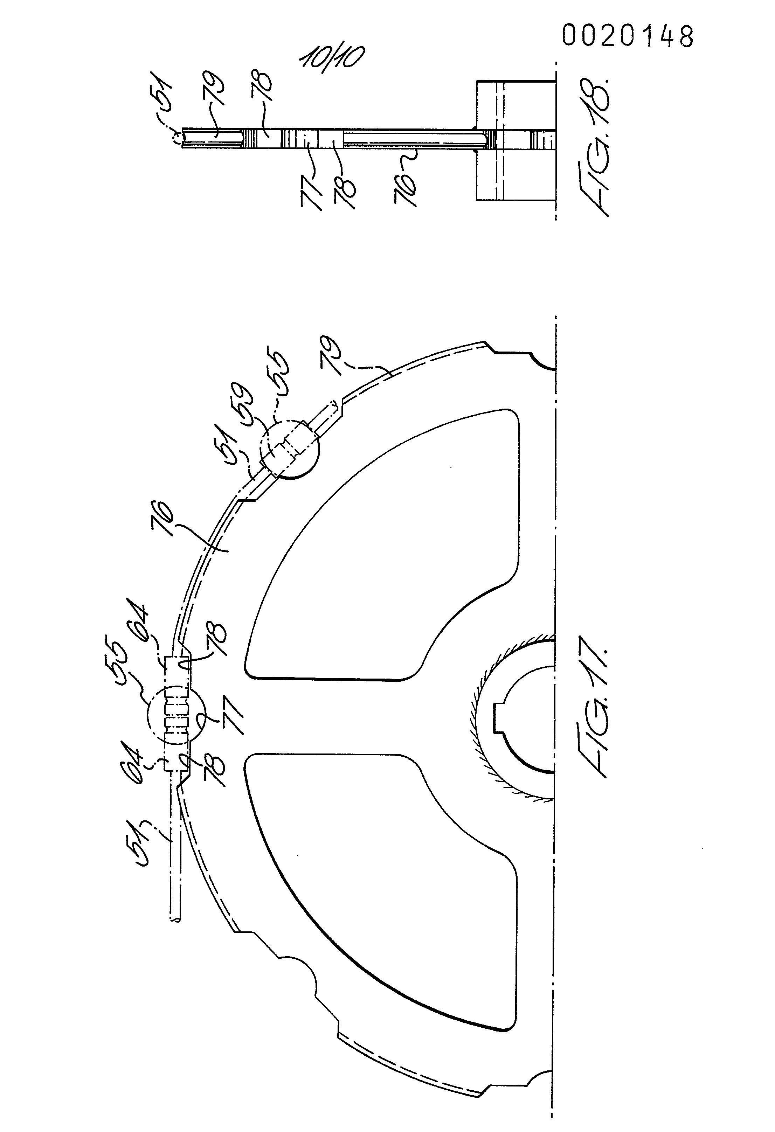

The cables 51 in this embodiment are joined to the connectors by ferrules 59 (Fig. 9) mounted at spaced intervals along the cables 51. The ferrules may be clamped or swaged to the cables 51 and are provided with grooves 60 to receive retaining pins. Alternatively or additionally the ferrules may be attached to the cables by grub screws 61 (Fig. 10) bearing on steel pads 62 which press the cable into a recess 63 in the ferrule and clamp it firmly. The interposition of steel pad 62 prevents the sharp end of the grub screw from damaging the cable.

Where two ends of cables are to be joined each end has a ferrule 64, 65 (Figs. 11, 14, 15) swaged to it and the two ferrules 64, 65 are inserted in a bore 66 in a connector 67a and held there by pins 67 and 68 passing through holes in the connector and engaging groove, in the ferrules.

To attach the cable to a connector in the normal way the ferrule 59 is located in a bore 69 in the connector 55 (Figs. 12 and 13) and a pin inserted through bore 70 in the connector to engage the groove 60 in the ferrule 59.

In Fig. 16 is shown a preferred shape of bucket 70 which has a guide tube 71 for the tie rod and an elongated open slot 72 in a plate 73 also shaped to receive a tie rod. The slot 72 allows for relative movement between buckets and also enables a bucket to be withdrawn by undoing only one tie rod i.e. the tie rod which passes through guide tube 71. The lip 74 is arranged to overlap the adjacent end 75 of the next bucket so as to accommodate any potential spillage. As the cables 51 (Fig. 17) pass over the modified sprockets 76 (in this embodiment) the connectors 55 engage arcuate recesses 77, any portion of the ferrules 59 or 64 which extends beyond the connector 55 is accommodated by the cut-away portions 78 and the cable 51 runs in the groove 79 at the outer edge of the sprocket.

In this embodiment the rollers 57 (Fig. 8) do not engage the sprockets and the track 58 may be discontinued in the area of the sprockets.

CLAIMS:

1.     A bucket type continuous elevator, the elevator comprising a framework (1,2,3,4), at least two pairs of sprockets (6;76) mounted in the framework, means for driving at least one sprocket (6a,6b), a pair of continuous cables (20 or 50) passing over said sprockets and adapted to be driven by the sprockets characterised by the buckets (8 or 70) being attached to the cables (20,50) by transverse tie rods (37,53) which extend through apertures (33,35;71, 72) in adjacent buckets, and means (38;59,67a) for attaching the rods (37,53) to the pair of continuous cables (20; 50), the buckets (8;70) having overlapping adjacent ends (32,34;74,75).

2.     An elevator according to claim 1 characterised in that there are rollers (57) mounted at the outer ends of the rods (53) and adapted to roll in guide means (58) mounted within the framework.

3.     An elevator according to claim 1 or claim 2 characterised in that the means for attaching the rods to the cables comprising ferrules (59) fixed to the cables (51) at intervals said ferrules (59) being engaged in connectors (55) and each connector (55) being joined to the associated tie rod (53).

4.     An elevator according to claim 3 and characterised in that the ferrules (59) are joined to the connectors (55) by pins (67) passing through apertures in the connectors (67a) and engaging slots (60) or apertures in the ferrules (59).

5.     An elevator according to claim 3 or 4 characterised by this, that the ferrules (59) are attached to the cables (51) by grub screws (61) extending through radial holes in the ferrules and engaging metal pads (62) which press against the cables and push the cables into shallow recesses (63) in the inner wall of each ferrule.

6.     An elevator according to any of claims 3 to 5 characterised by this, that the connectors (55) are adapted to engage recesses (77) between the teeth of the sprockets so as to enable the sprockets (76) to drive the cables (51).

7.      A bucket type continuous elevator or conveyor according to claim 1 or claim 2 and characterised by this, that the means for attaching the rods (37) to the cables (20) includes trunnions (38a, 38b) trunnions including means (12, 14,41) by which they are clamped to the continuous cables (20).

8.      A bucket type continuous elevator or conveyor according to any preceding claim and characterised by this, that each bucket is supported by only two continuous ropes or cables (51,52), one rope or cable being located on each side of each bucket.

9.      A bucket type continuous elevator or conveyor according to any of claims 1 to 7 and characterised by this, that each bucket is supported by two pairs of continuous ropes or cables (20,20), one pair of ropes or cables being located on one side of each bucket and one pair on the other side.

10.     A bucket type elevator or conveyor according to any preceding claim and characterised by this, that each bucket (8,70) is provided with a lip (32,75) to prevent its contents spilling out when the bucket is moved from a vertical to a horizontal position.

11.     A bucket type elevator or conveyor according to claim 1 characterised by this, that there are rollers or wheels (39) incorporated in the means (38a,38b) supporting the buckets from the ropes or cables (20), the rollers or wheels (39) being adapted to roll on gaps between teeth of the sprockets (6) as the cables or ropes pass over the sprockets.

12.     A bucket type elevator or conveyor according to any preceding claim and characterised by this, that the sprockets (6) include cable guides (40) to receive and support the cables (20) as they pass over the sprockets.

13.     A bucket type elevator or conveyor according to claim 11 or 12 characterised by this, that one of the support pairs of sprockets (6c,6d) is adjustable to adjust the rope or cable tension.

14.     A bucket type elevator according to any preceding claim characterised by this, that one pair of the slots (72) in each bucket (70), through which the tie rods (53) extend, are open-ended so that a bucket may be removed by withdrawing only one of the two tie rods by which it is supported.

15.      A bucket type elevator comprising a framework, (1, 2,3,4), at least two sets of sprockets (6,76) mounted on shafts (21,22a) journalled in the framework and supporting a pair of continuous cables (20), tie rods connecting the buckets (70) together and to the cables (20) via cable connectors, characterised by this, that there are rollers (57) at the ends of the tie rods (53) adapted to run in tracks (58) mounted on the framework, means to drive only one pair of sprockets (6a,6b) the connectors (55) being spaced so as to engage in the spaces between teeth of sprockets (e.g.76).

FIG.1.

0020148

*FIG.2.*

23

1

22

21

6a    6b

20

6e    6f    2

29  26

27    27

8

24

23a

6c    22a    6d    25

8

4

32   33   34

35

8

*FIG.8.*

75   74

71   73   72

70

*FIG.16.*

37    8    37

34    33    34

38a

38a

39    39

38b

41    38b

41    37    41    37

FIG.4.

44    12    43    41

20

43    42

44

FIG.7.

FIG.5.

5/10

0020148

FIG.6.

0020148

0020148

FIG. 8.

0020148

*59*

*51*

*60*

*FIG.9.*

*54*

*67a*

*64*

*67*

*68*

*66*

*65*

*51*

*67*

*68*

*56*

*FIG.11.*

*59*

*61*  *62*

*51*

*61*  *60*  *63*

*FIG.10.*

9/10

0020148

FIG.12.

FIG.13.

FIG.14.

FIG.15.

_FIG. 17._

_FIG. 18._

# EUROPEAN SEARCH REPORT

**European Patent Office**

0020148

Application number

EP 80 30 1786.2

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| | DE - C - 118 192 (T.A. EDISON)<br>* claim; fig. 1, 2 * | 1,2,7,<br>9,11,<br>15 | B 65 G   17/12<br>B 65 G   17/42 |
| | --<br>FR - A - 412 073 (P. AGUDIO)<br>* fig. 1 to 6 * | 1,4,6,<br>7,8,<br>12, | |
| | --<br>US - A - 3 338 379 (PATTERSON)<br>* fig. 1 to 3 * | 1,6,7,<br>8,12 | TECHNICAL FIELDS SEARCHED (Int.Cl.3) |
| | --<br>FR - A - 1 277 650 (GUMMI-JÄGER)<br>* fig. 9 * | 1,8,<br>15 | B 65 G.   17/00 |
| | --<br>US - A - 1 549 528 (FINLAYSON)<br>* claim 1; fig. 1 to 3 * | 1,7,<br>12 | |
| | --<br>FR - A - 1 019 407 (P. SCOPELLITI)<br>* fig. 1, 3 * | 1 | |
| | --<br>US - A - 1 956 312 (BROWNING,SR.)<br>* fig. 1 * | 1 | CATEGORY OF CITED DOCUMENTS |
| | --<br>DE - A1 - 2 736 634 (GUTEHOFFNUNGS-HÜTTE)<br>* claim 1     -- | 1 | X: particularly relevant<br>A: technological background<br>O: non-written disclosure<br>P: intermediate document<br>T: theory or principle underlying the invention |
| A | US - A - 3 265 189 (LARSON et al.)<br>* fig. 1 *<br>--<br>./.. | 1,2,<br>10 | E: conflicting application<br>D: document cited in the application<br>L: citation for other reasons |
| | | | &: member of the same patent family, corresponding document |

X   The present search report has been drawn up for all claims

| Place of search | Date of completion of the search | Examiner |
|---|---|---|
| Berlin | 03-09-1980 | KANAL |

EPO Form 1503.1   06.78

European Patent Office

**EUROPEAN SEARCH REPORT**

0020148

Application number

EP 80 30 1786.2

- page 2 -

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | <u>DE - C - 863 022</u> (SCHARDT)<br>* claim 1 *<br><br>-- | 1 | |
| A | <u>DE - C - 637 599</u> (STOESSEL & SÖHNE)<br>* fig. 1, 2 *<br><br>-- | 1,2,<br>8,11 | |
| A | <u>DD - A - 58 903</u> (GRUNERT et al.)<br>* claim 1 *<br><br>-- | 1 | |
| A | <u>US - A - 1 414 810</u> (HUDSON)<br>* fig. 1 to 4 *<br><br>---- | 1,6,7,<br>12 | TECHNICAL FIELDS SEARCHED (Int. Cl.³) |